(19) Europäisches Patentamt
European Patent Office
Office européen des brevets

(11) Veröffentlichungsnummer: **0 672 736 A2**

(12) # EUROPÄISCHE PATENTANMELDUNG

(21) Anmeldenummer: **95103044.4**

(51) Int. Cl.⁶: **C09D 183/04**

(22) Anmeldetag: **03.03.95**

(30) Priorität: **16.03.94 DE 4408849**

(43) Veröffentlichungstag der Anmeldung:
**20.09.95 Patentblatt 95/38**

(84) Benannte Vertragsstaaten:
**CH DE ES FR GB IT LI NL SE**

(71) Anmelder: **BAYER AG**
**D-51368 Leverkusen (DE)**
Anmelder: **Email Brügge N.V.**
**Pathoekeweg 116**
**B-8000 Brügge (BE)**

(72) Erfinder: **Mazanek, Jan, Dr.**
**Haferkamp 2**
**D-51061 Köln (DE)**
Erfinder: **Käsler, Karl-Heinz**
**Im Plackenbruch 26a**
**D-51467 Bergisch (DE)**
Erfinder: **Wagner, Gebhard, Dr.**
**Ackerstrasse 31**
**D-51519 Odenthal (DE)**
Erfinder: **Podestà, Wolfgang, Dr.**
**Genthof 36**
**B-8000 Brügge (BE)**

(54) **Beschichtungsmischungen, ein Verfahren zu ihrer Herstellung und ihre Verwendung.**

(57) Die vorliegende Erfindung betrifft neuartige Beschichtungsmischungen, enthaltend mindestens ein Polysiloxan, mindestens einen anorganischen Füllstoff und mindestens ein als Schmelze filmbildendes, anorganisches Material, ein Verfahren zur Herstellung sowie deren Verwendung.

EP 0 672 736 A2

Die vorliegende Erfindung betrifft Beschichtungsmischungen, enthaltend mindestens ein Polysiloxan, mindestens einen reaktiven anorganischen Füllstoff und mindestens ein als Schmelze filmbildendes anorganisches Material, ein Verfahren zur Herstellung sowie deren Verwendung.

Bislang ist eine Vielzahl von Mischungen aus mindestens einem Polysiloxan und mindestens einem anorganischen Füllstoff bekannt, die in den unterschiedlichsten Bereichen eingesetzt werden. Mischungen, bestehend aus einem Polysiloxanharz als Polysiloxan und einem Pigment als Füllstoff, sog. pigmentierte Polysiloxanharze, finden sowohl als Lacksysteme als auch in der Beschichtungstechnik Anwendung. Als wärmebeständige Beschichtungen kamen bislang sowohl pigmentierte Polysiloxanharze in organischen Lösemitteln als auch anorganische Beschichtungen aus Email zum Einsatz. Pigmentierte Polysiloxanharze weisen jedoch nur ein gutes Eigenschaftsprofil auf, wenn diese in organischen Lösemitteln eingesetzt werden. Anorganische Beschichtungen aus Email zeichnen sich durch eine hohe Wärmebeständigkeit aus. Nachteilig hingegen ist, daß sie spröde sind und erst durch Einbrennen bei Temperaturen von >400 °C ihre Endeigenschaften ereichen. Daher sind diese insbesondere in der Transportphase und bis zum Erreichen der notwendigen Temperatur leicht zu beschädigen, so daß Email als Beschichtung in vielen Bereichen nicht eingesetzt werden kann.

Hochtemperaturbeständige Systeme lassen sich bisher nur bei ausschließlicher Verwendung von lösemittelhaltigen Silikonharzen erzielen, gegebenenfalls unter Zusatz von Silikonölen als Verlaufs- oder Trennmittel. Entsprechende Beschichtungen sind zusammengesetzt aus dem Harz als Bindemittel, Pigmenten, Additiven (Katalysatoren, Emulgatoren, Verlaufsmittel usw.) und verschiedenen Lösemitteln. Die derzeitigen wäßrigen Systeme weisen Nachteile insbesondere in bezug auf ihr Verhalten nach der Raumtemperaturtrocknung auf. Mangelnder Korrosionsschutz, zu geringe Härte und Filmfestigkeit (Bindefestigkeit), zu lange Trocknungszeiten (Slurries) und eine zu geringe Lagerstabilität sind weitere Nachteile.

Wärmebeständige Beschichtungen finden vor allem Einsatz beim Schutz von Gegenständen und Anlagen der unterschiedlichsten Art, wie beispielsweise Schalldämpfern, Öfen, Anlagen der petrochemischen Industrie, Gehäuse für Geräte, Verbrennungsanlagen usw.

An wärmebeständigen Beschichtungen werden z.B. folgende Anforderungen gestellt, wie Temperaturbeständigkeit bis 600 °C bei Dauer- und Wechselbeanspruchung, hohe Beständigkeit bei Temperaturdifferenzen ($\Delta t$-Beständigkeit), hohe Biegefestigkeit, Farbtonbeständigkeit, Beständigkeit gegen korrosive Einflüsse, gute Trocknungseigenschaften, gute Haftung, einfaches Herstellverfahren (hohe Lagerstabilität), gute Handhabbarkeit und Einsetzbarkeit in den üblichen Verfahren, wie Spritzen, Walzen, Tauchen oder Streichen.

Die Herstellung eines hochtemperaturbeständigen Korrosionsschutzüberzuges erfolgt z.B. durch Trocknung bei Raumtemperatur und späteres Einbrennen.

In bisher bekannten Mischungen für wärmebeständige Beschichtungen konnte weder auf den Einsatz eines organischen Lösemittels verzichtet, noch ein entsprechend optimiertes Email, noch eine optimale Kombination von Polysiloxan und Email bereitgestellt werden.

Aufgabe der vorliegenden Erfindung war die Bereitstellung stabiler, lösemittelarmer, möglichst organische-Lösemittel-freier Beschichtungsmischungen auf Polysiloxan-Basis, die insbesondere als wärmebeständige Beschichtungen einsetzbar sind und die sich durch ein verbessertes Eigenschaftsprofil gegenüber dem Stand der Technik auszeichnen.

Es wurde nun gefunden, daß Beschichtungsmischungen aus

A) mindestens einem Polysiloxan,

B) mindestens einem reaktiven anorganischen Füllstoff,

C) mindestens einem als Schmelze filmbildenden anorganischen Material sowie

D) gegebenenfalls weiteren Zusatzstoffen,

überragende Eigenschaften gegenüber dem Stand der Technik aufweisen.

Gegenstand der vorliegenden Erfindung sind somit Beschichtungsmischungen, enthaltend mindestens ein Polysiloxan, mindestens einen reaktiven anorganischen Füllstoff und mindestens ein als Schmelze filmbildendes, anorganisches Material.

Bevorzugte erfindungsgemäße Beschichtungsmischungen sind dadurch gekennzeichnet, daß sie aus

A) 3 - 60 Gew.-%, vorzugsweise 10 - 60 Gew.-%, besonders bevorzugt 20 - 50 Gew.-%, eines Polysiloxans oder eines Gemisches aus mehreren Polysiloxanen,

B) 1 - 40 Gew.-%, bevorzugt 5 - 30 Gew.-%, besonders bevorzugt 10 - 20 Gew.-% eines reaktiven anorganischen Füllstoffs oder eines Gemisches aus mehreren reaktiven anorganischen Füllstoffen,

C) 3 - 90 Gew.-%, bevorzugt 10 - 70 Gew.-%, besonders bevorzugt 10 - 20 Gew.-%, eines als Schmelze filmbildenden anorganischen Materials sowie gegebenenfalls

D) 0 - 54 Gew.-% eines weiteren Zusatzstoffes oder eines Gemisches aus mehreren Zusatzstoffen D) bestehen,

wobei die Summe der Komponenten A), B), C) und D) 100 Gew.-% beträgt.

In den erfindungsgemäßen Beschichtungsmischungen beträgt der Gehalt an D) vorzugsweise mindestens 1 Gew.-%.

In den erfindungsgemäßen Beschichtungsmischungen ist Komponente A) vorzugsweise mindestens ein hydroxy- und/oder alkoxyfunktionelles Polysiloxan, und/oder ein Teilhydrolysat von Silanen, welches mit Wasser oder anderen Lösemitteln im Gemisch mit Wasser Emulsionen ausbildet. Polysiloxane im Sinne der Erfindung sind beispielsweise Copolymere aus Polysiloxan und Polyester, Polyether und/oder Polyepoxid (bzw. deren Gemische), ebenso wie lineare oder verzweigte Organopolysiloxane. Als Komponente A) wird vorzugsweise ein Polysiloxanharz oder ein Gemisch aus mehreren Polysiloxanharzen eingesetzt, wie sie in EP-A 512 418, S. 3, Zeilen 14-52, beschrieben sind. Besonders bevorzugt sind Polysiloxanharze, die einen Anteil von 10 - 80, bevorzugt 20 - 70, besonders bevorzugt 35 - 60 Gew.-%, an difunktionellen Bausteinen der allgemeinen Formel,

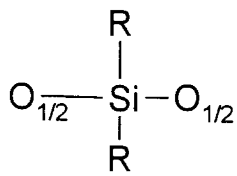 (I)

aufweisen, wobei

R einen beliebigen organischen Rest mit Si-C-Verknüpfung bezeichnet.

Besonders bevorzugt sind ebenfalls Kombinationen von verzweigten und linearen Polysiloxanen.

Bevorzugt wird die Komponente A) als wäßrige Emulsion eingesetzt. Der Einsatz von A) in einem organischen Lösemittel ist ebenfalls möglich, er hat lediglich ökologische Nachteile.

Die Komponente A) kann jedoch ebenso als Mischung mehrerer wäßriger Emulsionen vorliegen. Wird die Komponente A) in Form einer wäßrigen Emulsion eingesetzt, so liegt der Siloxangehalt zwischen 5 und 80 Gew.-%, bevorzugt zwischen 10 und 70 Gew.-%, besonders bevorzugt zwischen 20 und 60 Gew.-%. Komponente A) kann jedoch neben Wasser gegebenenfalls noch weitere Lösemittel enthalten. In diesem Fall sollte vorzugsweise mindestens ein Emulgator und/oder ein rheologisches Additiv, z.B. ein Verdikkungsmittel, zugesetzt werden. Als Emulgatoren sind sowohl kationische als auch anionische Emulgatoren einsetzbar. Die in Form einer Emulsion vorliegende Komponente A) kann Emulgatoren, Verdickungsmittel und auch andere Hilfsstoffe in Mengen von 0,5 - 15 Gew.-%, bevorzugt 1 - 6 Gew.-%, besonders bevorzugt 1,5 - 5 Gew.-%, enthalten.

Als weiteres Zusatzmittel kann Komponente A) 0 - 5 Gew.-%, bevorzugt 0 - 2 Gew.-%, besonders bevorzugt 0 - 1 Gew.-% eines Bakterizids oder Fungizids enthalten. Die Komponente A) kann sowohl aus reinen Polysiloxanen und/oder Ölen bestehen als auch in Form entsprechender Emulsionen in Wasser sowie im Gemisch mit Wasser und weiteren Lösungsmitteln vorliegen. Zudem kann die Komponente A) zusätzlich Katalysatoren enthalten. Der Gehalt an Katalysatoren kann bis zu 1 Gew.-%, bezogen auf die Komponente A), betragen, wobei übliche Kondensationskatalysatoren, wie beispielsweise Organozinnverbindungen, Organotitanverbindungen und Organoaluminiumverbindungen einsetzbar sind.

In den erfindungsgemäßen Beschichtungsmischungen umfaßt die Komponente B) alle reaktiven anorganischen oder mit organischen Resten modifizierten anorganische Füllstoffe, die reaktive Gruppen enthalten und die mit sich selbst und/oder anderen Komponenten der erfindungsgemäßen Mischungen reagieren können. Einige Beispiele für Komponente B) sind Kieselsole, Kieselsäureester, Organosilikonate, wie z.B. Natriummethylsilikonat, Titansäureester, Aluminate, Zirkonaluminate, Aluminiumhydroxid und organisch modifizierte Füllstoffe jeder Art, die reaktive Gruppen im obengenannten Sinne enthalten, wie z.B. Epoxy-, Amino- oder ungesättigte Gruppen enthaltende Füllstoffe, wie z.B. Quarz, Glas, Talkum, Kreide, Phosphate, Polyphosphate und Borate. Der Begriff Füllstoffe schließt auch Stoffe ein, die nach der erfindungsgemäßen Reaktion als feste Verbindungen bzw. Reaktionsprodukte vorliegen. So können als Edukte z.B. flüssige Titansäureester fungieren, die in die Beschichtungen eingebaut werden.

Als reaktive Füllstoffe im Sinne der Erfindung können auch Verbindungen eingesetzt werden, die unter den Bedingungen der Herstellung und/oder Anwendung der erfindungsgemäßen Beschichtungen zu anorganischen, gegebenenfalls reaktionsfähigen Verbindungen reagieren können. Als Beispiele für solche Verbindungen können z.B. neben den obengenannten Titansäureestern und Kieselsäureestern auch Silane und deren (Teil)-hydrolysate genannt werden.

In den erfindungsgemäßen Beschichtungsmischungen ist der reaktive anorganische Füllstoff B) vorzugsweise kolloidale Kieselsäure in Form eines Kieselsols, Alkylsilikonat, Aluminiumhydroxid, Silane oder deren (Teil)hydrolysate oder ein Gemisch aus diesen Verbindungen. Als Alkylsilikonat ist Natrium- oder Kaliummethylsilikonat besonders bevorzugt. Die kolloidale Kieselsäure hat dabei einen Gehalt von von 5 - 50 Gew.-% $SiO_2$, bevorzugt 10 - 40 Gew.-%, $SiO_2$, besonders bevorzugt 15 - 35 Gew.-% $SiO_2$. Ein anorganischer reaktiver Füllstoff im Sinne der Erfindung ist ebenfalls pyrogene Kieselsäure in Pulverform sowie kolloidale Kieselsäure in Form von Kieselsolen. Die Kieselsolteilchen können auch nach den bekannten Verfahren oberflächenmodifiziert sein. Ebenfalls bevorzugt wird als Komponente B) gegebenenfalls modifiziertes Kieselsol eingesetzt, wie es in den DE-B 2 408 896, US-A 2 892 797, US-A 2 574 902, US-A 2 457 971, US-A 2 668 149 und US-A 2 650 200 beschrieben ist. Besonders bevorzugt sind Kieselsole mit einer Partikelgröße von 5 - 100 Nanometer, ganz besonders bevorzugt 10 - 30 Nanometer.

In den erfindungsgemäßen Beschichtungsmischungen kann die Komponente C) jedes anorganische, in der Schmelze filmbildenden Material sein. Die Mischungen sind dadurch gekennzeichnet, daß das als Schmelze filmbildende Material (C) vorzugsweise Email und/oder ein niedrigschmelzendes Glas ist.

Als Email C) im Sinne der Erfindung sind folgende spezielle Zusammensetzungen (in Gew.-%) besonders bevorzugt:

| Verbindung | Anteil in Gew.-% | |
|---|---|---|
| $SiO_2$ | 25 - 45 | |
| $TiO_2$ | 10 - 27 | |
| $ZrO_2$ | 0 - 10 | |
| $P_2O_5$ | 0 - 7 | |
| $V_2O_5$ | 0 - 15 | |
| $B_2O_3$ | 0 - 15 | |
| $Al_2O_3$ | 0 - 5 | |
| $R_2O$ | 20 - 38 | mit $R_2O$ = $Na_2O$ 10-20, $K_2O$ 2-15, $Li_2O$ 0-8 |
| RO | 0 - 14 | mit RO = CaO 0-8, MgO 0-10, BaO 0-10, ZnO 0-8 |
| $F^-$ | 0 - 4 | |

Diese können bis zu 10 % mit Farboxiden ($Fe_2O_3$, CoO, CuO) und bis zu 10 % an schmelzwirksamen Substanzen wie SnO,$Bi_2O_3$ und $MoO_3$ versetzt werden.

Das niedrigschmelzende Glas und/oder Email im Sinne der Erfindung sollte einen Erweichungspunkt unterhalb von 600 °C, bevorzugt <550 °C, besonders bevorzugt <440 °C aber nicht unterhalb von 200 °C, bevorzugt nicht unterhalb von 300 °C und besonders bevorzugt nicht unterhalb von 350 °C, aufweisen. Der Wärmeausdehnungskoeffizient des niedrigschmelzenden Glases und/oder Emails sollte demjenigen des metallischen Substrats angepaßt sein, so daß es beim Aufheizen nicht zum Abplatzen der Beschichtungen kommt. Der thermische Ausdehnungskoeffizient des niedrigschmelzenden Glases und/oder Emails sollte mindestens 380 x $10^{-7}$/K, bevozugt > 400 x $10^{-7}$/K, betragen (gemessen kubisch, zwischen 20 °C und 400 °C), wobei ein Ausdehnungskoeffizient größer 550 x $10^{-7}$/K weniger bevorzugt ist. Bei der Herstellung, Verarbeitung und auch dem Gebrauch des Glases und/oder Emails ist der Einsatz niedrigschmelzender physiologisch bedenklicher oder toxischer Elemente, wie beispielsweise Blei, Cadmium, weniger bevorzugt. Zur Herstellung der erfindungsgemäßen Emails und/oder Gläser werden handelsübliche Emailrohstoffe, wie z.B. Borax ($Na_2B_4O_7$ x $5H_2O$) Quarzmehl, Natriumpolyphosphat, Feldspat, Zirkonsand, Flußspat, Alkali und Erdalkalicarbonaten, Titandioxid, Vanadiumpentoxid sowie evtl. Farboxiden ($Fe_2O_3$, MnO, CoO, CuO usw.) bei Temperaturen von 1 100 bis 1 260 °C geschmolzen und über wassergekühlten Walzen abgeschreckt. Die so entstandenen Flakes werden dann entweder trocknen oder unter Verwendung verschiedener Mühlenzusätze naß vermahlen und weiterverarbeitet. Gegebenenfalls können beim Trockenmahlen Mahlhilfsmittel wie Glykole, Siliconöle oder dergleichen zugesetzt werden.

In den erfindungsgemäßen Beschichtungsmischungen sind die weiteren Zusatzstoffe D) vorzugsweise Pigmente, Eisenoxide und/oder Glimmer. Besonders bevorzugt ist als Komponente D) ein Pigment oder weiterer Füllstoff in Form eines anorganischen, organischen und/oder metallischen Stoffes oder deren Gemische, wie z.B. Aluminiumoxid, Magnesium- und Calciumphosphate und/oder -carbonate, -carbide,

Nitride, Magnesiumoxid, Titandioxid, Siliciumcarbid, Zinkoxid, Aluminiumbronze, Zinn- und Zinkstaub, Phthalocyaninblau, verschiedene Spinelle, Ruß, Graphit usw. Ganz besonders bevorzugt sind D) anorganische thermostabile Pigmente.

Die Komponente D) kann ebenfalls jeder Zusatzstoff, der zur Herstellung von Lacken und Farben bekannt ist, sein, wie z.B. Füllstoffe und Pigmente, Lackadditive, wie Dispergier-, Verlauf-, Verdickungs-, Entschäumungs- und andere Hilfsmittel, Fungizide, Bakterizide, Stabilisatoren, Inhibitoren sowie Katalysatoren. D) kann aber auch ein Polymer oder ein Gemisch aus mehreren Polymeren sein, wie beispielsweise Cellulose, Polyether, Polyacrylate, Polyurethane, Weichmacher sowie verschiedene anorganische Harze.

Die erfindungsgemäßen Beschichtungsmischungen können auch organische, metallorganische und/oder anorganische Korrosionsinhibitoren enthalten, wie z.B. Phosphorsäurederivate, diverse Amine, substituierte Benzoltriazole, Nitrosophthalsäuresalze, Talmin, substituierte Phenole oder ähnliches.

Gegenstand der vorliegenden Erfindung ist auch ein Verfahren zur Herstellung der erfindungsgemäßen Beschichtungsmischungen, wobei die Einzelkomponenten A) bis C) und gegebenenfalls D) bei Raumtemperatur miteinander verrührt werden. Die Einzelkomponenten können dabei in beliebiger Reihenfolge zusammengemischt und nach bekannten Verfahren miteinander verrührt werden, bis eine homogene Mischung entstanden ist. Ebenso können zunächst z.B. Mischungen aus den Komponenten A) und B) hergestellt werden, zu denen dann getrennt oder zusammen zubereitete wäßrige Dispersionen der Komponenten C) und gegebenenfalls D) zugemischt werden. Es können aber auch Mischungen aus den Komponenten B) mit C) und/oder gegebenenfalls D) als Dispersionen hergestellt werden, die dann zur Komponente A) zugemischt werden. In einer bevorzugten Ausführungsform der vorliegenden Erfindung werden getrennt hergestellte Einzelemulsionen und/oder Dispersionen der Komponenten A), B) C) bzw. D) miteinander verrührt. Besonders bevozugt ist das Verrühren der Komponente C) und D) zu einer Dispersion und das anschließende Verrühren mit der Mischung aus den Komponenten A) und B).

Zur Herstellung der Dispersionen aus Komponenten B), C) bzw. D) werden die zur Herstellung von Lacken angewandten Methoden, wie Kugelmühlen und andere intensive Mischverfahren bevorzugt. Der Einsatz verschiedener Hilfsstoffe, insbesondere Dispergiermittel, wie Polyacrylsäurederivate, Polyphosphate, Phosphonocarbonsäurederivate ist bei der Herstellung dieser Beschichtungsmischungen bevorzugt. Zur Stabilisierung der erfindungsgemäßen Beschichtungssysteme und deren Komponenten und zum Schutz vor Sedimentation können verschiedene organische und anorganische Verbindungen, wie beispielsweise Bentonite, Cellulosen, Polyacrylate oder Polyurethanverdicker, eingesetzt werden.

Die Dispersionen aus den erfindungsgemäßen Mischungen enthalten 20 - 90 Gew.-%, bevorzugt 40 - 80 Gew.-%, besonders bevorzugt 50 - 70 Gew.-% Feststoff. Die wäßrige Phase kann gegebenenfalls organische Lösemittel enthalten.

Gegenstand der vorliegenden Erfindung ist auch ein Verfahren zur Herstellung von Beschichtungen aus den erfindungsgemäßen Beschichtungsmischungen, wobei die Beschichtungsmischungen auf das zu beschichtende Material aufgebracht, gegebenenfalls bei Raumtemperatur vorgetrocknet und anschließend 1 bis 120 Minuten Temperaturen von 150 bis 700 °C ausgesetzt werden. Vorzugsweise werden die Beschichtungsmischungen in Form einer wäßrigen Dispersion eingesetzt.

Als zu beschichtende Materialien können nahezu alle wärmebeständigen Stoffe eingesetzt werden, wie beispielsweise Stahl, Aluminium und auch andere Metalle und deren Legierungen, emaillierte Materialien sowie metallisch beschichtete Stähle. Diese Materialien können je nach Art und Anwendungszweck vorbehandelt oder unvorbehandelt eingesetzt werden. Eine etwaige Vorbehandlung kann nach allen bekannten Verfahren, wie beispielsweise der Strahlbehandlung, durchgeführt werden.

Das Aufbringen der erfindungsgemäßen Beschichtungsmischungen auf eine feste Unterlage erfolgt bevorzugt nach der Spritz-, Tauch-, Rollen- und Streichtechnik. Je nach Anforderungen können auf diese Weise Beschichtungen mit Schichtdicken von 5 - 300 µm, bevorzugt 10 - 150 µm, besonders bevorzugt 15 - 75 µm, hergestellt werden.

Die aufgetragenen Beschichtungsmischungen können auch bei höherer Temperatur vorgetrocknet werden. Die bei Raumtemperatur vorgetrockneten Beschichtungsmischungen besitzen als Beschichtung auf der festen Unterlage bereits ausreichende mechanische Festigkeit, um transportiert, verformt und/oder anders gehandhabt zu werden. Die endgültigen anwendungstechnischen Eigenschaften werden jedoch erst nach thermischer Behandlung erreicht. Dabei kann entweder eine kurzzeitige Behandlung bei höherer Temperatur oder aber sinngemäß eine längere Behandlung bei tiefer Temperatur erfolgen. Der bevorzugte Temperaturbereich liegt zwischen 150 und 700 °C, bevorzugt zwischen 200 und 600 °C. Die Dauer der thermischen Behandlung kann zwischen 1 - 120 min, bevorzugt 5 - 60 min. betragen. Die erfindungsgemäßen Beschichtungsmischungen werden vorzugsweise zur wärmebeständigen Beschichtung von Öfen, Schalldämpfern und Industrieanlagen beliebiger Art verwendet. Diese wärmebeständigen Beschichtungen stellen je nach vorheriger thermischer Behandlung weiche bis sehr harte Schichten dar und unterscheiden

sich in ihren Eigenschaften grundlegend von denen der eingesetzten Rohstoffe, da diese so gewählt wurden, daß sie je nach Temperaturbereich in unterschiedlichem Maße miteinander reagieren können. Das Eigenschaftsprofil der hergestellten Beschichtungen ist sehr stark von der gewählten Temperatur abhängig. Es ist daher möglich, über die Temperatur für jeden Anwendungsbereich maßgeschneiderte Beschichtungen herzustellen.

Die erfindungsgemäßen Beschichtungen zeichnen sich vor allem durch eine hohe Biege-, Temperatur- und Temperaturdifferenzbeständigkeit sowie Beständigkeit gegen Korrosion aus, wie die nachfolgenden Beispiele zeigen.

Die nachfolgenden Beispiele erläutern die Erfindung. Die Erfindung selber ist jedoch nicht auf diese Beispiele beschränkt.

## Ausführungsbeispiele

Folgende Substanzen werden in den Beispielen eingesetzt:

**I) als Polysiloxane:**

Ia) Wäßrige Emulsion eines hydroxyfunktionellen Methylsiliconharzes der mittleren Zusammensetzung $T_{210}D_{23}M_4$ mit einem mittleren Molekulargewicht von ca. 12 000

Ib) Wäßrige Emulsion eines hydroxyfunktionellen Methylsiliconharzes der mittleren Zusammensetzung $T_{200}D_{50}M_5$ mit einem mittleren Molekulargewicht von ca. 14 000

Ic) Silres M50E®: Wäßrige Emulsion eines hydroxyfunktionellen Methylsiliconharzes der mittleren Zusammensetzung $T_{170}D_{18}M_4$ mit einem mittleren Molekulargewicht von ca. 9000

Id) Wäßrige Emulsion eines $\alpha,\omega$-hydroxyfunktionellen Dimethylpolysiloxans mit einem mittleren Molekulargewicht von ca. 10000.

**II) als reaktive anorganische Füllstoffe:**

IIa) 30 %ige wäßrige kolloide Kieselsäuresuspension mit einer BET-Oberfläche von 100 $m^2/g$ und einem pH-Wert von 10

IIb) 40 %ige wäßrige kolloide Kieselsäuresuspension mit einer BET-Oberfläche von 200 $m^2/g$ und einem pH-Wert von 9

Ic) Aluminiumhydroxid

Id) 42 %iges Kaliummethylsiliconat in Wasser

**III) als Email:**

IIIa) PK 8701®: Emailfritte der Firma Email Brügge, bestehend aus Siliciumdioxid, Titandioxid, Alkalimetalloxid und Vanadiumoxid mit einem Erweichungspunkt von ca. 440 °C; Korngröße: <40 µm

IIIb) AT 6115®: Emailfritte der Firma Email Brügge, bestehend aus Siliciumdioxid, Titandioxid, Alkalimetalloxid und Vanadiumoxid mit einem Erweichungspunkt von ca. 420 °C; Korngröße: <40 µm

IIIc) VPPK 61-1166®: Emailfritte der Firma Email Brügge, bestehend aus Siliciumdioxid, Titandioxid, Alkalimetalloxid, Bariumoxid und Vanadiiumoxid mit einem Erweichungspunkt von ca. 400 °C; Korngröße: <40 µm.

**IV) als Pigmente:**

IVa) Bayferrox 303T®: Eisenoxidschwarz der Firma Bayer AG

IVb) Echtschwarz®: Spinellschwarz der Firma Bayer AG

**V) als Füllstoffe:**

Va) Eisenglimmer der Firma G.-H. Luh

**VI) als Verflüssiger:**

VIa) Bayhibit S®: Natriumsalz einer trifunktionellen Phosphoncarbonsäure der Firma Bayer AG

## Beispiel 1:

Allgemeine Vorschrift zur Herstellung der Slurries.

Emails, Pigmente und Füllstoffe werden gemäß der Mengenangabe in Tabelle 1 in 120 g Wasser eingetragen und ca. 30 min mit dem Dissolver bei 3000 Upm gerührt. Anschließend wird Bayhibit S® zugesetzt. Die Mischung wird 1 h bei 1 800 Upm homogenisiert.

Tabelle 1

| Einwaagen der Einzelkomponenten (Gew.-Teile) zur Herstellung der Slurries | | | | | | | |
|---|---|---|---|---|---|---|---|
| | Slurry-Nr. Bestandteile in Gew.-Teilen | 1 | 2 | 3 | 4 | 5 | 6 |
| IIIa) | Email (PK 8701®) | 180 | - | - | - | - | - |
| IIIb) | Email (AT 6115®) | - | 180 | - | 90 | - | - |
| IIIc) | Email (VPPK 61-1166®) | - | - | 180 | - | - | - |
| IVb) | (Echtschwarz 100®) | - | - | - | 45 | 90 | - |
| IVa) | (Bayferrox 303T®) | - | - | - | 45 | 90 | - |
| V) | (Eisenglimmer) | - | - | - | - | - | 180 |
| VI) | (Bayhibit S®) | 1,0 | 1,0 | 1,0 | 1,0 | 1,0 | 1,0 |

**Beispiel 2:**

Allgemeine Vorschrift zur Herstellung der Mischungen für wärmebeständige Beschichtungen: Polysiloxane, reaktive anorganische Füllstoffe sowie die in Beispiel 1 hergestellten Slurries, werden gemäß den in Tabelle 2 angegebenen Mengenangaben eingewogen und verrührt. Anschließend wird die Mischung 10 min mit einem Dissolver bei 1800 Upm homogenisiert.

Tabelle 2: Einwaagen an Polysiloxan, reaktiven Füllstoffen und Slurries zur Herstellung der Mischungen für wärmebeständige Beschichtungen (Angaben in Gew.-Teilen)

| Beispiele bzw. Vergleichsbeispiele | 1 | 2 | 3 | 4 | 5 | 6 | 7 | 8 | 9 | 10 | 11 | 12 | 13 | 14 | 15 | 16 | 17 | V1 | V2 | V3 |
|---|---|---|---|---|---|---|---|---|---|---|---|---|---|---|---|---|---|---|---|---|
| Gew.-Anteile der Einzelkomponenten | | | | | | | | | | | | | | | | | | | | |
| Ia (46 %ig) | - | - | - | - | 32,2 | - | - | 32,2 | - | 30,4 | - | 15,2 | 25,1 | - | - | 29,0 | 29,0 | 46,0 | - | - |
| Ib (47 %ig) | 31,5 | 31,5 | 31,5 | 31,5 | - | - | 15,7 | - | 31,5 | - | 31,5 | - | - | 31,5 | 31,5 | - | - | - | 31,5 | - |
| Ic (50 %ig) | - | - | - | - | - | 29,6 | 15,8 | - | - | - | - | - | - | - | - | - | - | - | - | 29,6 |
| Id (60 %ig) | - | - | - | - | - | - | - | - | - | - | - | - | - | - | - | 5,4 | 5,4 | - | - | - |
| IIa (30 %ig) | 21,0 | - | 21,0 | 21,0 | 21,0 | 21,0 | 21,0 | 21,0 | 21,0 | 1,4 | 21,0 | 10,0 | 26,0 | - | - | 21,0 | 21,0 | - | - | - |
| IIb (40 %ig) | - | 15,8 | - | - | - | - | - | - | - | - | - | - | - | - | - | - | - | - | - | - |
| IIc | - | - | - | - | - | - | - | - | - | - | - | - | - | 6,3 | - | - | - | - | - | - |
| IId | - | - | - | - | - | - | - | - | - | - | - | - | - | - | 15,0 | - | 5,0 | - | - | - |
| 60 %iger Slurry 1 | - | - | 30.4 | - | - | 30,4 | - | - | - | - | - | - | - | - | - | - | - | 30,4 | - | - |
| 60 %iger Slurry 2 | - | 30,4 | - | - | - | - | - | - | 60,8 | 9,4 | - | 150,0 | 1,0 | - | - | - | - | - | - | - |
| 60 %iger Slurry 3 | - | - | - | 30,4 | - | - | - | - | - | - | - | - | - | - | - | - | - | - | - | - |
| 60 %iger Slurry 4 | 60,8 | - | - | - | 30,4 | - | 60,8 | - | - | - | 60,8 | - | - | 60,8 | 60,8 | 30,4 | 30,4 | - | - | - |
| 60 %iger Slurry 5 | - | 30,4 | 30,4 | 30,4 | - | 30,4 | - | 30,4 | - | 33,4 | - | 45,6 | 20,0 | - | - | - | - | 30,4 | 24,7 | 24,7 |
| 60 %iger Slurry 6 | - | - | - | - | 30,4 | - | - | - | - | - | 45,6 | - | - | - | - | - | - | - | - | - |

**Beispiel 3**

Herstellung der wärmebeständigen Beschichtungen

Die Mischungen werden mit der Spritzpistole auf entfettete bzw. gesandstrahlte Stahlbleche aufgetragen, so daß die Trockenschichten ca. 20 - 35 µm betragen. Die Trocknung erfolgt wie in Tabelle 3 angegeben.

**Tabelle 3:** Trocknungszeit bei Raumtemperatur (RT) und Übersicht über die Testergebnisse

| Beispiele bzw. Vergleichsbeispiele | 1 | 2 | 3 | 4 | 5 | 6 | 7 | 8 | 9 | 10 | 11 | 12 | 13 | 14 | 15 | 16 | 17 | V1 | V2 | V3 |
|---|---|---|---|---|---|---|---|---|---|---|---|---|---|---|---|---|---|---|---|---|
| Behandlungsmethode | | | | | | | | | | | | | | | | | | | | |
| **Trocknung bei RT:** **klebefrei** (staubtrocken (min) | 15 | 15 | 15 | 15 | 15 | 15 | 15 | 15 | 15 | 15 | 15 | 10 | 15 | 15 | 15 | 15 | 15 | 40 | 60 | 45 |
| druckfest (min) | 30 | 30 | 30 | 30 | 25 | 30 | 30 | 30 | 30 | 30 | 30 | 25 | 30 | 30 | 30 | 25 | 20 | 90 | 180 | 100 |
| **gesandstrahlter Untergrund:** Temperaturbelastung: 1h/400°C | 0 | 0 | 0 | 0 | 0 | 0 | 0 | 0 | 0 | 0 | 0 | 0 | 0 | 0 | 0 | 0 | 0 | 10 | 10 | 5 |
| 1h/600°C | 0 | 0 | 0 | 0 | 0 | 0 | 0 | 0 | 0 | 0 | 0 | 0 | 0 | 0 | 0 | 0 | 0 | 20 | 40 | 30 |
| Temperaturschocktest: 600°C/RT | 0 | 0 | 0 | 0 | 0 | 0 | 0 | 0 | 0 | 0 | 0 | 10 | 0 | 0 | 0 | 0 | 0 | 80 | 90 | 70 |
| **Salzsprühtest**, 24 h, nach thermischer Belastung 1 h/400°C | Ri0 | Ri1 | Ri1 | Ri2 | Ri2 | Ri2 | Ri2 | Ri2 | Ri2 | Ri2 | Ri2 | Ri4 | Ri4 | Ri1 | Ri1 | Ri2 | Ri2 | - | - | - |
| 1 h/600°C | Ri0 | Ri0 | RiO | Ri0 | Ri0 | Ri0 | Ri0 | Ri0 | Ri0 | Ri0 | Ri0 | Ri0 | Ri2 | Ri0 | Ri0 | Ri0 | Ri0 | - | - | - |
| **glatter, entfetteter Untergrund** Temperaturbelastung: 1 h/200°C | 0 | 0 | 0 | 0 | 0 | 0 | 0 | 0 | 0 | 0 | 0 | 0 | 0 | 0 | 0 | 0 | 0 | 0 | 0 | 0 |
| 1 h/400°C | 0 | 0 | 0 | 0 | 0 | 0 | 0 | 0 | 0 | 0 | 0 | 0 | 0 | 0 | 0 | 0 | 0 | 10 | 10 | 15 |
| 1 h/600°C | 0 | 0 | 0 | 0 | 0 | 0 | 0 | 0 | 0 | 0 | 0 | 10 | 0 | 0 | 0 | 0 | 0 | 80 | 80 | 40 |
| **Temperaturschocktest:** 600°C/RT | 0 | 0 | 0 | 5 | 5 | 50 | 0 | 10 | 0 | 10 | 0 | 80 | 5 | 5 | 0 | 0 | 0 | 100 | 100 | 100 |
| **Salzsprühtest**, 24 h. nach thermischer Belastung 1 h/400°C | Ri1 | Ri2 | Ri1 | Ri2 | Ri0 | Ri4 | Ri1 | Ri2 | Ri1 | Ri2 | Ri1 | - | Ri3 | Ri2 | Ri1 | Ri0 | Ri0 | - | - | - |
| 1h/600°C | Ri0 | Ri0 | Ri0 | Ri1 | Ri0 | Ri1 | Ri0 | Ri1 | Ri0 | Ri1 | Ri0 | - | Ri2 | Ri1 | RiO | Ri0 | Ri0 | - | - | - |

RT = Raumtemperatur

**Meßgrößen und Testbedingungen zur Beurteilung wärmebeständiger Beschichtungen:**

**Temperaturbelastung:**

Meßgröße ist der abgeplatzte Filmteil in % nach thermischer Behandlung bei festgesetzter Zeit und Temperatur.

**Temperaturschocktest:**

Die beschichtete und vorgetrocknete Platte wird 1 Stunde einer Temperatur von 600 °C ausgesetzt und anschließend direkt in 20 °C kaltem Wasser abgeschreckt. Meßgröße: Abgeplatzter Filmteil in %

Salzsprühtest:

Meßgröße: Restwert nach DIN 53 210; dabei werden die Vergleichsbeispiele und andere Beschichtungen, die nach thermischer Belastung bereits Platzstellen zeigten, nicht geprüft. Die Meßwerte bedeuten dabei:

| Abkürzung | gerostete Fläche in % |
|---|---|
| RiO = | 0 |
| Ri1 = | 0,05 |
| Ri2 = | 0,5 |
| Ri3 = | 1 |
| Ri4 = | 8 |

## Patentansprüche

1. Beschichtungsmischungen, enthaltend mindestens ein Polysiloxan, mindestens einen reaktiven anorganischen Füllstoff und mindestens ein als Schmelze filmbildendes, anorganisches Material.

2. Beschichtungsmischungen nach Anspruch 1, dadurch gekennzeichnet, daß diese aus
   A) 3 bis 60 Gew.-% eines Polysiloxans oder eines Gemisches aus mehreren Polysiloxanen,
   B) 1 bis 40 Gew.-% eines reaktiven anorganischen Füllstoffs oder eines Gemisches aus mehreren reaktiven anorganischen Füllstoffen,
   C) 3 bis 90 Gew.-% eines als Schmelze filmbildenden anorganischen Materials,
   sowie gegebenenfalls 0 bis 54 Gew.-% eines weiteren Zusatzstoffes oder eines Gemisches aus mehreren Zusatzstoffen D) bestehen,
   wobei die Summe der Komponenten A), B), C) und D) 100 % beträgt.

3. Beschichtungsmischungen nach einem der Ansprüche 1 oder 2, dadurch gekennzeichnet, daß der Gehalt an D) mindestens 1 Gew.-% beträgt.

4. Beschichtungsmischungen nach einem der Ansprüche 1 bis 3, dadurch gekennzeichnet, daß die Komponente A) mindestens ein hydroxy- und/oder alkoxyfunktionelles Polysiloxan und/oder ein (Teil)-hydrolysat von Silanen ist, welches mit Wasser oder anderen Lösemitteln im Gemisch mit Wasser Emulsionen ausbildet.

5. Beschichtungsnlischungen nach einem der Ansprüche 1 bis 4, dadurch gekennzeichnet, daß der reaktive anorganische Füllstoff B) kolloidale Kieselsäure in Form eines Kieselsols, Alkylsilikonat, Aluminiumhydroxid, Silane oder deren (Teil)hydrolysate oder ein Gemisch aus diesen Verbindungen ist.

6. Beschichtungsmischungen nach einem der Ansprüche 1 bis 5, dadurch gekennzeichnet, daß das als Schmelze filmbildende anorganische Material C) Email und/oder ein niedrigschmelzendes Glas ist.

7. Beschichtungsmischungen nach einem der Ansprüche 1 bis 6, dadurch gekennzeichnet, daß die weiteren Zusatzstoffe D) vorzugsweise Pigmente, Eisenoxide und/oder Glimmer sind.

8. Verfahren zur Herstellung der Beschichtungsmischungen gemäß einem der Ansprüche 1 bis 7, dadurch gekennzeichnet, daß die Einzelkomponenten A) bis C) und gegebenenfalls D) bei Raumtemperatur miteinander verrührt werden.

9. Verfahren zur Herstellung von Beschichtungen aus Beschichtungsmischungen nach einem der Ansprüche 1 bis 8, dadurch gekennzeichnet, daß die Mischung auf das zu beschichtende Material aufgebracht, gegebenenfalls bei Raumtemperatur vorgetrocknet und anschließend 1 bis 120 Minuten Temperaturen von 150 bis 700 °C ausgesetzt werden.

10. Verwendung der Beschichtungsmischungen nach einem der Ansprüche 1 bis 7 zur wärmebeständigen Beschichtung von Öfen, Schalldämpfern und Industrieanlagen beliebiger Art.